# EUROPÄISCHE PATENTSCHRIFT

(11) **EP 2 093 185 B1**
(45) Veröffentlichungstag und Bekanntmachung des Hinweises auf die Patenterteilung: **30.04.2014**
(21) Anmeldenummer: 09150096.7
(22) Anmeldetag: 06.01.2009
(51) Int. Cl.: C01B 3/30, C03C 17/22, C03C 23/00, B41M 5/26

(54) **Verfahren zur Herstellung von Titancarbid**
Method for making titanium carbide
Procédé de fabrication de carbure de titane

(30) Priorität: 11.01.2008 DE 102008004129; 28.05.2008 DE 102008025582
(43) Veröffentlichungstag der Anmeldung: 26.08.2009
(73) Patentinhaber: TESA SE, 20253 Hamburg (DE)
(72) Erfinder: Koops, Arne, 23881 Neu-Lankau (DE); Reiter, Sven, 22049 Hamburg (DE); Stähr, Jochen, 25524 Itzehoe (DE)

(56) Entgegenhaltungen:
- WO-A-99/25562
- DE-A1- 10 152 073
- US-A- 5 194 237
- US-A- 5 987 920
- US-B1- 6 313 436
- US-B1- 6 503 310

## Beschreibung

Die Erfindung betrifft ein Verfahren zur Herstellung von Titancarbid (TiC) gemäß dem Oberbegriff von Anspruch 1 sowie ein spezielles Markierungsverfahren basierend auf der Herstellung von TiC.

Titancarbid (auch als Titaniumcarbid bezeichnet) gehört zu den Nichtoxidkeramiken. Nichtoxidkeramiken zeichnen sich durch höhere kovalente und geringe ionische Bindungsanteile mit hoher chemischer und thermischer Stabilität gegenüber den Silikat- und Oxidkeramiken aus. Technisches Titancarbid enthält um etwa 19,5 Massen-% gebundenen und bis zu 0,5 Massen-% ungebundenen, so genannten freien Kohlenstoff. Der theoretische stöchiometrische Kohlenstoffgehalt liegt bei 20,05 Massen-%.

Titancarbidverbindung (TiC) weist die folgenden Eigenschaften auf:

| | |
|---|---|
| Farbe: | grau-metallisch |
| Schmelzpunkt: | 3157 °C |
| Dichte: | 4,93 g/cm³ |
| Kristallstruktur: | kubisch, besitzt dichteste Kugelpackung, beim Auffüllen aller Oktaederlücken: TiC |

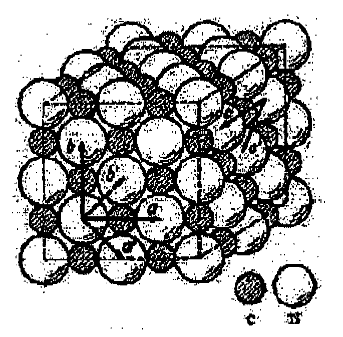

Insbesondere verbinden sich mit Titancarbid folgende Eigenschaften/Vorteile:
- eine relativ hohe Härte und damit Abrieb- und Verschleißfestigkeit
- eine sehr hohe Hitzebeständigkeit
- Korrosionsbeständigkeit
- eine gute Biokompatibilität
- ferroelektrische Eigenschaften
- eine niedrige Wärmeleitfähigkeit (bei hohem Kohlenstoffanteil)
- elektrische Halbleitung
- Beständigkeit gegenüber kalten Säuren und Laugen

Titancarbid ist ein titanähnlicher, harter, spröder Stoff und kommt in titanhaltigem Gusseisen vor. Titancarbid wurde erstmals von Moissan im elektrischen Ofen hergestellt und wird heute technisch durch Reduktion von TiO₂ mit Ruß oder reinstem Graphit erhalten (TiO₂ + 3C => TiC + 2CO).

Auch ist die Herstellung dünner TiC-Schichten durch Abscheidung aus der Gasphase (Chemische oder Physikalische Gasphasenabscheidung) bekannt, zum Beispiel aus einem Gemisch von TiCl₄ mit H₂ und CH₄ oder aus Tetra(neopentyl)titan.

Neben Wolframcarbid ist TiC das technisch wichtigste Carbid, das als Hartstoff für die Herstellung von Cermets und Hartmetallen wie zum Beispiel Titanit, zu härtenden, korrosionsschützenden Auflagen auf Stahl und zur Festigkeitserhöhung von Edelstählen in der Kerntechnik verwendet wird.

Die US 6,313,436 B beschreibt ein wärmeaktiviertes chemisches Markierungsverfahren, bei dem eine Schicht gemischten Metalloxides an einem Metallsubstrat angebracht wird. Diese Schicht enthält einen Energieabsorptions-Verstärker. Nach dem Anbringen wird die Schicht mit einem Energiestrahlbündel in Übereinstimmung mit der Gestalt der Markierung, die angebracht werden soll, bestrahlt. Das Energiestrahlbündel weist dabei eine auf den Energieabsorptions-Verstärker abgestimmte Wellenlänge auf, so dass dieser angeregt wird und auf dem Substrat eine Markierungsschicht ausgebildet wird

Aus der DE 101 52 073 A ist ein Lasertransferfilm zum dauerhaften Beschriften von Bauteilen bekannt. Dieser Lastertransferfilm weist eine Trägerschicht auf, auf deren unteren Seite eine Klebeschicht zumindest partiell vorhanden ist. Ferner ist auf der Trägerschicht und/oder der Klebeschicht zumindest partiell eine Pigmentschicht aufgetragen, die ein lasersensibles Pigment enthält. Geeignete Pigmente sind beispielsweise Farbpigmente und Metallsalze. Insbesondere finden Pigmente der Firma Thermark Anwendung, zum Beispiel Thermark 120-30F, bei denen es sich um Metalloxide, zum Beispiel Molybdäntrioxid handelt. Des Weiteren können Mischungen mehrerer Pigmente oder Abmischungen von Pigmenten und Glaspartikeln, wie sie bei der Firma Merck und Ferro Inc. erhältlich sind, eingesetzt werden, die zu einem Sinterungsprozess führen können. Weiterhin sind verschiedene Pigment der Firma Merck (beispielsweise die Perlglanzpigmente EM 143220 und BR 3-01) geeignet. Zudem kann das lasersensible Pigment auch zusätzlich zu dem Additiv Titandioxid verwendet werden.

Aus der US 6,503,310 B ist eine lasermarkierbare Beschichtung mit einem Pigment sowie einem Fixiermaterial bekannt. Das Pigment kann aus Titandioxid, Zinkoxid, Zinksulfid oder dergleichen gebildet sein. Das Fixiermaterial kann Wismuttrioxid, Antimonoxid und dergleichen sein.

WO 99/25562 A offenbart ein Verfahren zur Laserbeschriftung von Substraten wie Glas, Keramik, Metall und Kunststoff. Dazu wird Material auf die Oberfläche des Substrats aufgebracht wird, gefolgt vom Entfernen eines Teils des Markierungsmaterials mit einem Laser. Das verbleibende Material wird anschließend beispielsweise durch die Einwirkung von Wärme fixiert.

US 5,987,920 A offenbart ein Verfahren, bei dem durch eine Schicht eine darunter liegende Schicht mittels eines Lasers ablatiert wird.

Aufgabe der Erfindung ist es, ein Verfahren zur Herstellung von Titancarbid zu schaffen, das eine gezielte Beschichtung von Substraten mit einer Titancarbidschicht ermöglicht.

Gelöst wird diese Aufgabe bei einem Verfahren mit den Merkmalen des Oberbegriffs von Anspruch 1 durch die Merkmale des kennzeichnenden Teils von Anspruch 1. Eine nebengeordnete Lösung beschreibt ein Markierungsverfahren gemäß Anspruch 14 Vorteilhafte Ausgestaltungen und Weiterbildungen sind Gegenstand der jeweiligen Unteransprüche.

Demgemäß betrifft die Erfindung ein Verfahren zur Herstellung von Titancarbid unter Verwendung einer Pigmentformulierung. Die Pigmentformulierung enthält zumindest einen Titanspender sowie einen Kohlenstoffspender. Als Titanspender wird dabei reines Titan oder eine Titanverbindung bezeichnet, das bzw. die eine Affinität hat, unter Energieeinwirkung jedenfalls kurzzeitig freies Titan als Reaktionspartner bereitzustellen. Ggf. kann die Bereitstellung des freien Titans auch über den Weg eines titanhaltigen Zwischenprodukts erfolgen. Ein Kohlenstoffspender hingegen stellt insbesondere unter Energieeinstrahlung freien Kohlenstoff bereit. Bei dem Kohlenstoffspender handelt es sich um eine Kohlenstoffverbindung und um freien, nicht gebundenen Kohlenstoff. Zudem kann die Pigmentformulierung auch weitere Komponenten wie zum Beispiel Polymere, Absorber etc. enthalten. Zur Bildung von Titancarbid wird die Pigmentformulierung mittels eines Lasers bestrahlt. Durch die Laserbestrahlung kommt es zum Breitstellen des Titans und des Kohlenstoff, beispielsweise durch ein Aufbrechen einer Titanverbindung sowie einer Kohlenstoffverbindung, und es bildet sich TiC.

In bevorzugter Ausgestaltung erfolgt die Bildung des Titancarbids derart, dass dieses unmittelbar auf einem zu beschichtenden Substrat abgeschieden wird. Dies erfolgt insbesondere dadurch, dass die Pigmentverbindung vor der Laserbestrahlung mit dem Substrat in Kontakt gebracht wird.

Die Pigmentformulierung ist als Polymermatrix ausgebildet, die zumindest den Titanspender sowie den Kohlenstoffspender aufweist. Der Kohlenstoffspender ist dabei die Polymermatrix selbst und die zusätzliche Kohlenstoffkomponente Ruß. Die Polymermatrix ist derart ausgebildet, dass sie auf die Laserbestrahlung überwiegend mit Pulverisierung reagiert, wodurch die einzelnen Komponenten, insbesondere Ti und C freigesetzt werden und für die Reaktion zu TiC zur Verfügung stehen. Bei einer ausreichend hohen Konzentration freien Kohlenstoffs wird dieser zudem in das TiC eingelagert, wodurch dessen Farbintensität gezielt beeinflusst werden kann.

Diese laserinduzierte Pulverisierung wird vorzugsweise bei spröden Werkstoffen erzielt. Bei genügend hoher Leistung bildet sich in Verbindung mit einem Plasma eine Dampfkapillare aus. Durch die Kapillare nimmt die Absorption wesentlich höhere Werte an, so dass die Laserstrahlung tiefer in das Material eindringen kann und den Kunststoff partikelförmig um die Wärmeeinflusszone explosionsartig aus der Matrix herausschleudern kann. Dieser Effekt kann optimal zur Herstellung eines Transfermaterials genutzt werden, indem diese Kapillare als Reaktandenraum dient sowie das entstandene Pulver als Titan- und Kohlenstoffspender zur Synthese des Titancarbids umgesetzt wird.

Als Polymermatrix wird vorliegend jede Matrix basierend auf polymeren Bestandteilen bezeichnet. Neben den polymeren Bestandteilen kann die Matrix auch beliebige nicht polymere Bestandteile enthalten, lediglich der Hauptbestandteil sollte polymerer Art sein. Insbesondere bezeichnet der Begriff "Polymermatrix" auch eine Mischung eines polymeren Pulvers. In besonders bevorzugter Ausgestaltung handelt es sich bei der Polymermatrix um eine duroplastische Polymermatrix. Es hat sich gezeigt, dass insbesondere Duroplaste besonders geeignet sind, um eine Pulverisierung zu erzielen. Im Gegensatz dazu neigen besonders Thermoplaste und Elastomere zum Aufschmelzen bei Laser-Strahlung, da mehr Laserleistung absorbiert wird als durch Wärmeleitung abtransportiert werden kann. Es kommt zu einer lokalen Überhitzung in Form einer Verflüssigung oder oberhalb einer kritischen Intensität sogar zu einer Verdampfung des Kunststoffwerkstoffs. Eine Schmelze eignet sich jedoch nur begrenzt zur dauerhaften Markierung von Substraten.

Nach einer ersten vorteilhaften Ausgestaltung der Erfindung wird als Titanspender Titandioxid verwendet, vorzugsweise in Rutil-Struktur. Bei der Rutil-Struktur handelt es sich um eine der vier Kristallmodifikationen von Titandioxid, wie sie aus der Fachliteratur bekannt ist. Die Titandioxid-Pigmente in Rutil-Struktur haben eine Brechzahl von n = 2,75 und absorbieren Anteile des sichtbaren Lichtes bereits bei Wellenlängen um 430 nm. Sie weisen eine Härte von 6 bis 7 auf.

Die Pigmentformulierung weist Ruß zur Bereitstellung des für die Synthese von Titancarbid notwendigen freien Kohlenstoffs auf. Der Ruß spaltet unter Energieeinstrahlung, insbesondere unter Lasereinstrahlung auf und bildet dabei freien Kohlenstoff. Des Weiteren kann der freie Kohlenstoff auch aus der unter Energieeinwirkung, insbesondere durch Laserbestrahlung, zersetzten, verdampften, oxydierten, depolymerisierten und/oder pyrolysierten Polymermatrix stammen.

Vorzugsweise wird neutraler Ruß mit einem pH-Wert von 6 bis 8 verwendet. Dies ist insbesondere im Hinblick auf eine einfache Handhabung und zur Vermeidung spezieller Sicherheitsvorschriften im Umgang mit sauren oder basischen Materialen bevorzugt. Bevorzugt kommen vorwiegend Thermalruß, Acetylenruß und Flammruß in Frage. Besonders bevorzugt wird Flammruß. Der pH-Wert von Flammruß liegt üblicherweise bei 7 bis 8, von Thermalruß bei 7 bis 9 und von Acetylenruß bei 5 bis 8. Der pH-Wert von Furnacerußen liegt üblicherweise bei 9 bis 11, d.h. diese sind stark basisch. Der pH-Wert oxidierter Gasruße liegt üblicherweise bei 2,5 bis 6, d.h. diese sind sauer. Die Verwendung derartiger saurer oder basischer Ruße ist jedoch grundsätzlich nicht ausgeschlossen.

Die genannten Pigmentruße sind außerordentlich beständig gegen Chemikalien und zeichnen sich durch hohe Lichtechtheit und Witterungsbeständigkeit aus. Aufgrund der sehr hohen Farbtiefe und Farbstärke sowie anderer spezifischer Eigenschaften sind Pigmentruße die am häufigsten eingesetzten Schwarzpigmente. Die technische Herstellung von Pigmentrußen erfolgt durch thermisch-oxidative beziehungsweise thermische Spaltung von Kohlenwasserstoffen. Pigmentruße werden fast ausschließlich nach den aus der Literatur bekannten Furnaceruß-, Degussa-Gasruß- oder Flammruß-Verfahren hergestellt.

Nach einer weiteren vorteilhaften Ausgestaltung der Erfindung ist die Polymermatrix eine strahlengehärtete Polymermatrix. Die Polymermatrix besteht vorteilhaft aus einem Lack, insbesondere aus einem gehärteten Lack, vorzugsweise einem strahlengehärteten Lack, besonders vorzugsweise aus einem elektronenstrahlengehärteten aliphatischen, difunktionellen Polyurethanacrylat-Lack. In einer alternativen Ausführungsform besteht die Polymermatrix aus Polyesteracrylat.

In bevorzugter Ausgestaltung ist vorgesehen, dass die Pigmentformulierung frei von unter Energieeinstrahlung aufschmelzenden Kunststoffen, insbesondere auch frei von anderen aufschmelzenden Materialien, ausgebildet ist. Hierdurch kann einerseits der Produktaufbau möglichst einfach gehalten werden, zum anderen wird eine Beschriftung nicht durch das Schmelzen von Kunststoff oder anderen Materialien beeinträchtigt. Zudem kann bei der vorliegenden Pigmentformulierung auch auf eine Glasfritte als Bestandsteil verzichtet werden. Überraschenderweise hat sich gezeigt, dass eine dauerhafte Bindung der Markierung insbesondere an Glas auch ohne eine Glasfritte erzielt wird.

Grundsätzlich sind vier Lacktypen vorteilhaft für die Polymermatrix verwendbar, sofern ihre Stabilität ausreicht, zum Beispiel säurehärtende Alkydmelaminharze, additionsvernetzende Polyurethane, radikalisch härtende Styrollacke und ähnliche. Besonders vorteilhaft sind jedoch strahlenhärtende Lacke, da sie sehr schnell ohne langwieriges Verdampfen von Lösungsmitteln oder Einwirken von Wärme aushärten. Solche Lacke sind zum Beispiel von A. Vrancken beschrieben worden (Farbe und Lack 83,3 (1977) 171).

Die Pigmentformulierung weist die folgende Zusammensetzung auf:

| | |
|---|---|
| 100 phr | Polymermatrix, insbesondere ein strahlengehärteter aliphatischer, difunktioneller Polyurethanacrylat, |
| 0,2 phr bis 2,5 phr | Ruß und |
| 45 phr bis 65 phr | Titandioxid. |

"phr" bedeutet dabei "parts per hundred resin", eine in der Polymerindustrie gebräuchliche Einheit zur Charakterisierung von Mischungszusammensetzungen, wobei alle polymeren Bestandteile (hier also die Polymermatrix) zu 100 phr gesetzt werden.

Weiter vorzugsweise ist die Zusammensetzung wie folgt:

| | |
|---|---|
| 100 phr | Polymermatrix, insbesondere ein strahlengehärteter aliphatischer, difunktioneller Polyurethanacrylat, |
| 0,4 phr | Ruß und |
| 63,2 phr | Titandioxid. |

Zur Optimierung der Eigenschaften kann die Pigmentformulierung mit einem oder mehreren Additiven wie Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Beim Auftreffen des Laserstrahlung wird die Pigmentformulierung im Wesentlichen in kleinen Teilchen im Bereich des Auftreffpunkts abgesprengt, so dass der mit dem Laser erzeugte pulverisierte Abbrand der Pigmentformulierung eine zahlenmittlere Teilchengröße von 0,5 bis 2,0 aufweist.

Bei Einstrahlung von Laserstrahlung, beispielsweise als Laserpuls, tritt die Strahlung beziehungsweise das Laserlicht direkt in Kontakt oder in Wechselwirkung mit der Oberfläche der Pigmentformulierung, durch das Auftreffen des Laserlichts auf die Schicht wird das Laserlicht in Wärme umgewandelt, welche sich auf die Oberfläche auswirkt. Der Laserstrahl wird durch Absorption in das Material eingekoppelt. Die Absorption hat die Auswirkung, dass Material verdampft wird, Partikel aus der Pigmentformulierung herausgeschlagen werden und es zu einer Plasmabildung kommen kann. Besonders an den Rändern der Laserstrahlexposition treten thermische Schmelzprozesse auf.

Typischerweise werden langkettige Polymerbestandteile der Pigmentformulierung bei Umwandlung der eingestrahlten Energie in Wärme aufgespalten, und es entsteht unter anderem durch thermisches Cracken elementarer Kohlenstoff. Zusammenfassend partikuliert/verdampft/zersetzt sich die Polymermatrix durch den hohen Energieeintrag der Laserstrahlung.

Dieser Kohlenstoff schlägt sich in Form von Titaniumcarbid auf dem zu beschriftenden Gut nieder. Die Emissionsbestandteile bei der Beschriftung sind damit der elementar vorliegende Kohlenstoff, das TiO₂ und die Crackprodukte aus der Polymermatrix der Pigmentformulierung. Folgende Reaktion vermag den Vorgang widerzuspiegeln, die als carbothermische Synthesereaktion zur Herstellung von Titancarbid beschrieben werden kann.

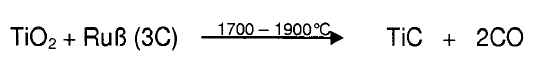

Der Energieeintrag wird durch den Wechselwirkungskoeffizienten der Reaktanten, insbesondere deren Absorptionsverhalten, sowie durch Lasertyp und die Parametrierung der Strahlungsquelle bestimmt. Die Steuerung wird vorwiegend über die Laserleistung und die Beschriftungsgeschwindigkeit vorgenommen.

Bevorzugt ist, wenn ein diodenendgepumpter Feststoffkörperlaser eingesetzt wird, die Pulsdauer des Lasers zwischen 40 und 90 ns liegt, die Ausgangsleistung 20 Watt beträgt und/oder die Beschriftungsgeschwindigkeit bei 250 mm/sec bis 750 mm/sec liegt, je nach Beschriftungsinhalten. Im Hinblick auf die fortschreitende Lasertechnologie sind jedoch auch noch kürzer Pulslängen denkbar, insbesondere bis hin zu Pulsdauern im Bereich der ns oder ps. Eine derartig kurze Pulsdauer ist insbesondere hinsichtlich kurzer Belichtungszyklen besonders vorteilhaft.

Neben der Anwendung für Beschriftungen kann das Titancarbid auch für dünne Hartstoffschichten verwendet werden, die vor allem auf Schneide- und Formwerkzeugen zur Verbesserung des Verschleißverhaltens zum Einsatz kommen. Die Dicke derartiger Hartstoffschichten beträgt üblicherweise etwa 5 µm.

Vorzugsweise liegt die Polymerformulierung in einer Pigmentschicht vor. Eine Pigmentschicht ist insbesondere im Hinblick auf eine einfache Anwendbarkeit vorteilhaft. Die Dicke der Pigmentschicht liegt vorteilhaft in einem Bereich von etwa 20 µm bis etwa 500 µm, insbesondere in einem Bereich von etwa 30 µm bis etwa 100 µm, um die an sie gestellten Anforderungen hervorragend zu erfüllen.

Gemäß einer weiteren vorteilhaften Ausführungsform der Erfindung ist die Pigmentschicht partiell oder vollflächig mit einer insbesondere druckempfindlichen Klebemasse beschichtet. Eine derartige Ausgestaltung ist besonders vorteilhaft, um eine einfache Anwendung der Pigmentschicht zu ermöglichen. Mittels der so gebildeten (partiellen) Klebeschicht kann die Pigmentschicht auf einfache Weise während der Laserbestrahlung auf einem Zielsubstrat festgelegt werden, ohne dass die Gefahr einer Verschiebung der Pigmentschicht besteht.

Insbesondere kann die Klebstoffschicht in Form von Dots oder im Siebdruck aufgebracht sein, gegebenenfalls auch als Randbedruckung, so dass die Pigmentschicht in beliebiger Art und Weise auf dem Untergrund verklebt werden kann.

Vorzugsweise handelt es sich bei der Klebemasse um Haftkleber. Die Pigmentschicht wird ein- oder beidseitig mit dem bevorzugten Haftkleber als Lösung oder Dispersion oder 100 %ig (zum Beispiel Schmelze) beschichtet. Die Klebeschicht(en) können durch Wärme oder energiereiche Strahlen vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer oder Silikon geeignet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Abstimmung der Klebemasse richtet sich insbesondere nach dem Einsatzzweck, also der Art des Klebeuntergrunds, der voraussichtlichen Klebedauer, den Umweltbedingungen etc.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Geeignete Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere wie aufgeführt in Ullmanns Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Die Beschichtungsstärke mit Klebemasse liegt vorzugsweise im Bereich von 5 bis 100 g/m², insbesondere 10 bis 25 g/m².

Weiter vorzugsweise ist die Pigmentschicht auf einem Träger, vorzugsweise auf einer Trägerfolie aufgebracht. Die Aufbringung erfolgt vorteilhaft durch eine Beschichtung der Pigmentschicht auf den Träger.

Als Trägerfolie lassen sich vorzugsweise Folien einsetzen, die transparent sind, insbesondere monoaxial und biaxial gereckte Folien auf Basis von Polyolefinen, Folien auf Basis von gerecktem Polyethylen oder gereckten Copolymeren, enthaltend Ethylen- und/oder Polypropyleneinheiten, gegebenenfalls auch PVC-Folien und/oder Folien auf Basis von Vinylpolymeren, Polyamiden, Polyester, Polyacetalen, Polycarbonaten. Auch PET-Folien sind hervorragend als Träger geeignet. Auch Folien auf Basis von gerecktem Polyethylen oder gereckten Copolymeren, enthaltend Ethylen- und/oder Polypropyleneinheiten, sind als Trägerfolie geeignet.

Weiter bevorzugt sind einschichtige, biaxial oder monoaxial gereckte Folien und mehrschichtige, biaxiale oder monoaxiale Folien auf Basis von Polypropylen. Folien auf Basis von Hart-PVC werden ebenso verwendet wie Folien auf Basis von Weich-PVC.

Folien auf Polyesterbasis, wie zum Beispiel Polyethylenterephthalat sind ebenfalls bekannt und eignen sich als Träger der Pigmentschicht.

Sodann können Teile der Pigmentschicht durch eine partiell aufgebrachte Passivierschicht deaktiviert sein. Dies erfolgt insbesondere in Bereichen, in denen keine Titancarbidbeschichtung oder -markierung erfolgen soll. Insbesondere erfolgt eine Passivierung auf der Seite der Pigmentschicht, die sich während der Laserbestrahlung mit dem Substrat in Kontakt befindet. Die Passivierung kann beispielsweise in Gestalt einer Negativdarstellung der gewünschten Markierung erfolgen, so dass die Markierung selbst anschließend durch flächige Bestrahlung erfolgen kann.

Die Pigmentschicht beziehungsweise diese mit Trägerfolie und/oder Klebebeschichtung sowie allen weiteren Schichten kann im Sinne dieser Erfindung in Form aller flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen vorliegen. Möglich ist auch die Wicklung einer vergleichsweise langen Pigmentschicht zu einer archimedischen Spirale, von der jeweils für den Einsatz ein Stück gewünschter Länge abgetrennt wird.

Weiter vorzugsweise lässt sich die erfindungsgemäße Pigmentschicht in einem Verfahren zur Markierung eines Substrats, insbesondere von Glas, verwenden, wobei die Pigmentschicht durch Andrücken in direkten Kontakt mit dem zu beschriftenden Substrat gebracht wird und anschließend die Pigmentschicht mittels Laserstrahlung bestrahlt wird. Durch die Bestrahlung wird die Polymermatrix pulverisiert, freier Kohlenstoff gebildet und in den bestrahlten Bereichen eine Markierung auf dem Substrat ausgebildet.

Durch den direkten Kontakt zwischen Pigmentschicht und Substrat wird ein Zwischenraum vermieden, der zu einer Vergrößerung des Reaktionsraums während der Laserbestrahlung führt. Dies hätte zur Folge, dass sich der Niederschlag auf dem Substrat über eine größere Oberfläche verteilen kann, so dass die Konturenschärfe der entstehenden Beschriftung geringer würde.

Insbesondere eignet sich dieses Verfahren zur Markierung transparenter Substarte, wie zum Beispiel Glas, da die Beschriftung durch das Substrat hindurch erfolgen kann. Die Strahlung durchdringt also das Substrat, bei einem entsprechenden Gebilde wie einem Röhrchen ggf. auch mehrere Schichten des Substrats, und interagiert mit der auf dem Substrat angeordneten Pigmentschicht, wodurch, wie zuvor beschrieben wurde, die Markierung auf der der Strahlungsquelle abgewandten Substratseite ausgebildet wird. Insbesondere die Beschriftung von Glas mittels der zuvor beschriebenen Pigmentschicht hat sich als besonders vorteilhaft erwiesen. Die Beschriftung kann mit relativ kurzen Belichtungszeiten erfolgen und wird dauerhaft mit dem Glas verbunden. Zudem kann die Beschriftung ohne sichtbare Beschädigung des Glases durchgeführt werden.

Besonders vorteilhaft lässt sich die Pigmentschicht zur Markierung von Glas einsetzen. Unter einem entsprechenden Glaskörper werden Scheiben, Behältnisse oder Röhren, allgemein konvex oder konkav gebogenen Glasflächen subsumiert. Gerade bei Glas werden alle Vorteile der erfindungsgemäßen Pigmentschicht genutzt: Die Markierung erfolgt äußerst widerstandsfähig. Es wird ein sehr gutes Beschriftungsergebnis erzielt. Es zeigt sich zudem eine überraschend geringe Schmauchbildung. Die Schriftzüge zeigten direkt nach der Beschriftung eine stark kontrastreiche Beschriftung. Über trockenes oder feuchtes Abwischen der Kennzeichnungsoberfläche kann der nicht fixierte Rückstand entfernt werden.

Insbesondere bei Nutzung der Standardlaser, speziell der weitverbreiteten Nd-YAG-Festkörperlaser mit einer Wellenlänge von 1,06 µm, werden scharfe, kontrastreiche Beschriftungen und Kennzeichnungen erhalten.

Mit der Pigmentschicht können Beschriftungen mit einer Auflösung in µm-Größenordnung erzielt werden. Weiter vorzugsweise ist die aufgebrachte Markierung ein Interferenzhologramm, da die Auflösungsqualität des Verfahrens Strukturen zur Lichtverstärkung und -auslöschung zulässt. Alternativ kann die Beschriftung auch in Form eines computergenerierten Hologramms erfolgen. Ein computergeneriertes Hologramm erlaubt durch Berechnung der Hologrammstruktur und Aufbringen dieser Struktur durch Laserbestrahlung eine Individualisierung der Kennzeichnung, die aufgrund ihrer Ausgestaltung nur schwer fälschbar ist und demzufolge einen hohen Fälschungsschutz bietet. Zudem können in eine derartige Struktur auf einfache Weise Informationen versteckt eingebracht werden.

Bevorzugt erfolgt vor dem Aufbringen der Pigmentschicht eine Reinigung der zu beschriftenden Oberfläche. Weiterhin ist es vorteilhaft, wenn nach dem Applizieren der Laserstrahlung und somit der Markierung die Substratoberfläche von Rückständen gereinigt und/oder die nicht weiter benötigte Pigmentschicht entfernt wird. Besonders vorteilhaft ist es dabei, wenn die Pigmentschicht im Wesentlichen nur auf später zu beschriftende oder zu markierende Oberflächenbereiche aufgebracht wird.

Aufgrund der Bildung von Einlagerungsverbindungen oder interstitiellen Verbindungen (Besetzung von Zwischengitterplätzen), können kleine Kohlenstoffatome auf Zwischengitterplätzen oder Lücken des Kristallgitters eingelagert werden, die dann dem Titancarbid eine schwarze Farbe geben. Daraus resultiert letztendlich eine kontrastreiche schwarze Beschriftung auf dem zu beschriftenden Substrat.

Mit anderen Worten, die sehr kontrastreiche Beschriftung auf dem zu beschriftenden Gut entsteht dadurch, dass sich Titancarbid auf dem Gut niederschlägt, wobei in die Lücken des Kristallgitters freie Kohlenstoffatome eindringen, die beispielsweise aus dem Ruß oder aus gecracken elementaren Kohlenstoff aus der Polymermatrix stammen.

Die sich auf dem Glas einstellende Beschriftung hat eine Höhe von 0,25 µm bis 3,0 µm, je nach Beschriftungsinhalt und Parametrierung. Die Temperaturstabilität liegt nachgewiesenermaßen im Bereich von -50 °C bis 1200 °C. Die Tieftemperatur- und Hitzebeständigkeit ist aber deutlich höher. Die mechanische Beständigkeit gegenüber Abrieb ist extrem hoch (Crockmetertest > 1000 Hübe).

Die Beschriftung zeigt eine hohe Auflösungsgenauigkeit, je nach verwendeter Strahlqualität, die Linienbreite beträgt 70 µm bis 80 µm. Es sind beispielsweise maschinenlesbare 2D-Codes von 1,5 mm x 1,5 mm Kantenlänge mit einem Inhalt von 16 Zeichen darstellbar. Zudem können alle üblichen Kennzeichnungsinhalte wie Logos, Piktogramme, Zeichnungen, alphanumerische Zeichen, Sonderzeichen und Pixelgraphiken realisiert werden.

Zudem können alle üblichen Kennzeichnungsinhalte wie Logos, Piktogramme, Zeichnungen, alphanumerische Zeichen, Sonderzeichen und Pixelgraphiken realisiert werden.

Die zuvor beschrieben Pigmentformulierung sowie das entsprechende Beschriftungsverfahren eignen sich insbesondere für folgende Anwendungsfelder, in denen eine sichere Kennzeichnung von insbesondere Glasbehältern eine große Bedeutung hat:
- Biotechnologische, medizinische und pharmazeutische Primär-, Sekundär- und Tertiärverpackungsmittel aus Glas
- Verpackungsmittel aus Glas für Chemikalien, Hilfsmittel, Lebensmittel und Genussmittel
- Behältnisse und/oder Bauteile aus Glas für chirurgische, therapeutische und diagnostische Verfahren.
- Behältnisse und/oder Bauteile für industrielle und analytische Verfahren (Pipetten, pH-Meter etc.).
- Behältnisse und/oder Bauteile für biologische Verfahren, die aktives/inaktives Zellmaterial betreffen.

Im Folgenden ist anhand eines Beispiels die Zusammensetzung einer Polymerformulierung näher erläutert, ohne in irgendeiner Form einschränkend zu wirken:

| Substrat | Anteil [phr] |
|---|---|
| EB 284 | 85,1 |
| HDDA | 5,0 |
| DVE 3 | 9,9 |
| Ruß | 0,4 |
| Titandioxid | 63,2 |
| **Gesamt Summe** | **163,6** |

| | |
|---|---|
| EB 284: | Aliphatisches, difunktionelles Polyurethanacrylat (Hersteller Cytec) |
| HGDDA: | Hexandioldiacrylat (Hersteller BASF |
| DVE-3: | Divinylether (Hersteller ISP oder BASF) |
| Ruß: | Furnaceruß mit einer Teilchengröße von 56 nm, Oberfläche 45 m²/g (Hersteller Evonik, Printex 25) |
| TiO₂: | (Hersteller Kronos, Kronos 2160) |

Die Zusammensetzung wird zu einer Schicht mit einer Dicke von 100 µm ausgestrichen.
Aus dem Ausstrich werden Stanzlinge mit den Maßen 30 x 50 mm hergestellt.

## Patentansprüche

1. Verfahren zur Herstellung von Titancarbid (TiC) unter Verwendung einer Pigmentformulierung, enthaltend mindestens einen Titanspender einerseits sowie einen Kohlenstoffspender andererseits, wobei die Pigmentformulierung laserbestrahlt wird und unter Laserbestrahlung zu TiC reagiert, **dadurch gekennzeichnet, dass**
die Pigmentformulierung die folgende Zusammensetzung aufweist:
| | |
|---|---|
| 100 phr | Polymermatrix, insbesondere ein strahlengehärteter aliphatischer, difunktioneller Polyurethanacrylat, |
| 0,2 phr bis 2,5 phr | Ruß und |
| 45 phr bis 65 phr | Titandioxid |

2. Verfahren nach Anspruch 1, **dadurch gekennzeichnet,**
**dass** das Titancarbid auf einem Substrat abgeschieden wird.

3. Verfahren nach Anspruch 1 oder 2, **dadurch gekennzeichnet,**
**dass** die Pigmentformulierung als Polymermatrix ausgebildet ist, dass die Polymermatrix den Titanspender sowie den Kohlenstoffspender aufweist und dass die Polymermatrix durch die Laserbestrahlung überwiegend pulverisiert wird.

4. Verfahren nach einem der vorherigen Ansprüche, **dadurch gekennzeichnet,**
**dass** die Herstellung von Titancarbid unter Ausschluss einer Glasfritte und/oder unter Ausschluss eines unter Energieeinstrahlung schmelzenden Kunststoffes durchgeführt wird.

5. Verfahren nach einem der vorherigen Ansprüche, **dadurch gekennzeichnet,**
**dass** als Titanspender Titandioxid verwendet wird.

6. Verfahren nach einem der vorherigen Ansprüche, **dadurch gekennzeichnet,**
**dass** als Kohlenstoffspender freier Kohlenstoff aus Ruß gebildet wird und/oder aus der unter der Lasereinwirkung zersetzten, verdampften, oxydierten, depolymerisierten und/oder pyrolysierten Polymermatrix freigesetzt wird,
vorzugsweise, dass der freie Kohlenstoff ausschließlich aus Ruß und/oder der Polymermatrix bereitgestellt wird.

7. Verfahren nach einem der vorherigen Ansprüche, **dadurch gekennzeichnet,**
**dass** als Polymermatrix eine strahlengehärtete Polymermatrix verwendet wird und/oder
**dass** als Polymermatrix eine duroplastische Polymermatrix verwendet wird.

8. Verfahren nach einem der vorherigen Ansprüche, **dadurch gekennzeichnet,**
**dass** durch die Laserbestrahlung ein pulverisierter Abbrand der Pigmentformulierung mit einer zahlenmittleren Teilchengröße von 0,5 µm bis 2.0 µm erzeugt wird.

9. Verfahren nach einem der vorherigen Ansprüche, **dadurch gekennzeichnet,**
**dass** als Pigmentformulierung eine Pigmentschicht mit einer Dicke in einem Bereich von 20 µm bis 500 µm verwendet wird.

10. Verfahren nach einem der vorherigen Ansprüche, **dadurch gekennzeichnet,**
**dass** als Pigmentformulierung eine Pigmentschicht verwendet wird; die partiell oder vollflächig mit einer, insbesondere druckempfindlichen, Klebemasse beschichtet ist.

11. Verfahren nach einem der vorherigen Ansprüche, **dadurch gekennzeichnet,**
**dass** als Pigmentformulierung eine Pigmentschicht verwendet wird, die auf einem Träge, vorzugsweise auf einer Trägerfolie, aufgebracht ist.

12. Verfahren nach einem der vorherigen Ansprüche, **dadurch gekennzeichnet,**
**dass** als Pigmentformulierung eine Pigmentschicht verwendet wird, die durch eine partiell aufgebrachte Passivierschicht deaktiviert ist,
vorzugsweise, dass die Passivierung auf der Seite der Pigmentschicht erfolgt ist, die sich während einer Abscheidung des TiC auf einem Substrat mit dem Substrat in Kontakt ist.

13. Verfahren nach einem der vorherigen Ansprüche, **dadurch gekennzeichnet,**
**dass** die Laserbestrahlung mit einem gepulsten Laser, vorzugsweise mit einer Pulsdauer kleiner 90 ns, weiter vorzugsweise mit einer Pulsdauer zwischen 40 ns und 90 ns, durchgeführt wird.

14. Verfahren zur Markierung eines Substrats unter Bildung von Titancarbid gemäß dem Verfahren eines der vorherigen Ansprüche,
bei dem eine Pigmentformulierung auf das zu markierende Substrat aufgebracht und mittels eines Lasers bestrahlt wird, bei dem die Laserstrahlung mit der Pigmentformulierung interagiert und in den bestrahlten Bereichen TiC als Markierung auf dem Substrat abgeschieden wird.

15. Verfahren nach Anspruch 14 **dadurch gekennzeichnet,**
**dass** als Substrat ein transparentes Substrat, insbesondere Glas, verwendet wird und dass die Bestrahlung der Pigmentverbindung durch das Substrat hindurch erfolgt, so dass die Markierung auf der der Laserquelle abgewandten Substratseite ausgebildet wird.

16. Verfahren nach Anspruch 14 oder 15 **dadurch gekennzeichnet,**
**dass** die Markierung unter Ausschluss einer Glasfritte und/oder unter Ausschluss eines unter Energieeinstrahlung schmelzenden Kunststoffes durchgeführt wird.

17. Verfahren nach einem der Ansprüche 14 bis 15 **dadurch gekennzeichnet,**
**dass** als Markierung ein Interterenzhologramm oder ein computergeneriertes Hologramm aufgebracht wird.

## Claims

1. Process for preparing titanium carbide (TiC) using a pigment formulation comprising at least one titanium donor on the one hand and a carbon donor on the other, **characterized in that** the pigment formulation being laser-irradiated and reacting under laser irradiation to form TiC , the pigment formulation has the following composition:.
| | |
|---|---|
| 100 phr | polymer matrix, more particularly a radiation-cured aliphatic, difunctional polyurethane acrylate, |
| 0.2 phr to 2.5 phr | carbon black, and |
| 45 phr to 65 phrtitanium dioxide. | |

2. Process according to Claim 1, **characterized in that** the titanium carbide is deposited on a substrate.

3. Process according to Claim 1 or 2, in that the pigment formulation is designed as a polymer matrix, in that the polymer matrix comprises the titanium donor and the carbon donor, and in that the polymer matrix is predominantly pulverized as a result of the laser irradiation.

4. Process according to one of the preceding claims, **characterized in that** the preparation of titanium carbide is carried out with the exclusion of a glass frit and/or with the exclusion of a plastic which melts under energy irradiation.

5. Process according to one of the preceding claims, **characterized in that** the titanium donor used is titanium dioxide.

6. Process according to one of the preceding claims, **characterized in that** the free carbon is formed as a carbon donor by carbon black and/or is released from the polymer matrix decomposed, evaporated, oxidized, depolymerized and/or pyrolyzed on laser exposure, preferably **in that** the free carbon is produced exclusively from carbon black and/or the polymer matrix.

7. Process according to one of the preceding claims, in that the polymer matrix used is a radiation-cured polymer matrix and/or in that the polymer matrix used is a thermosetting polymer matrix.

8. Process according to one of the preceding claims, **characterized in that** a pulverized material removed from the pigment formulation by burning, the pigment formulation having a number-average particle size of 0.5 µm to 2.0 µm, is generated by the laser irradiation.

9. Process according to one of the preceding claims, **characterized in that** the pigment formulation used is a pigment layer with a thickness in the range from 20 µm to 500 µm.

10. Process according to one of the preceding claims, **characterized in that** the pigment formulation used is a pigment layer which is coated partly or over its whole area with an adhesive, more particularly a pressure-sensitive adhesive.

11. Process according to one of the preceding claims, **characterized in that** the pigment formulation used is a pigment layer which is applied on a carrier, preferably on a carrier sheet.

12. Process according to one of the preceding claims, in that the pigment formulation used is a pigment layer which is deactivated by a partially applied passivating layer, preferably in that the passivation is performed on the side of the pigment layer which is in contact with the substrate during a cleavage of the TiC on a substrate.

13. Process according to one of the preceding claims, **characterized in that** the laser irradiation is performed with a pulsed laser, preferably having a pulse duration of less than 90 ns, more preferably having a pulse duration between 40 ns and 90 ns.

14. A process for marking a substrate with formation of titanium carbide according to the process of one of the preceding claims, in which a pigment formulation is applied to the substrate to be marked and is irradiated by means of a laser, in which the laser radiation interacts with the pigment formulation, and, in the regions irradiated, TiC is deposited as a marking on the substrate.

15. Process according to claim 14, in that the substrate used is a transparent substrate, in particular glass, and in that the irradiation of the pigment compound is performed through the substrate in such a way that the marking is developed on the side of the substrate remote from the laser source.

16. Process according to Claim 14 or 15, **characterized in that** the marking is performed with exclusion of a glass frit and/or with exclusion of a plastic which melts under energy irradiation.

17. Process according to one of Claims 14 to 15, **characterized in that** the marking applied is an interference hologram or a computer-generated hologram.

## Revendications

1. Procédé de fabrication de carbure de titane (TiC) utilisant une formulation de pigment, contenant au moins un donneur de titane d'un côté et un donneur de carbone d'un autre côté, la formulation de pigment étant exposée à un laser et réagissant pour former TiC sous l'exposition à un laser, **caractérisé en ce que** la formulation de pigment présente la composition suivante :
| | |
|---|---|
| 100 pce | d'une matrice polymère, notamment un acrylate de polyuréthane bifonctionnel aliphatique durci par rayonnements, |
| 0,2 pce à 2,5 pce | de noir de carbone et |
| 45 pce à 65 pce | de dioxyde de titane. |

2. Procédé selon la revendication 1, **caractérisé en ce que** le carbure de titane est déposé sur un substrat.

3. Procédé selon la revendication 1 ou 2, **caractérisé en ce que** la formulation de pigment est conçue sous la forme d'une matrice polymère, **en ce que** la matrice polymère comprend le donneur de titane et le donneur de carbone, et **en ce que** la matrice polymère est essentiellement pulvérisée par l'exposition à un laser.

4. Procédé selon l'une quelconque des revendications précédentes, **caractérisé en ce que** la fabrication de carbure de titane est réalisée avec exclusion d'une fritte de verre et/ou avec exclusion d'un plastique fondant par exposition à un rayonnement énergétique.

5. Procédé selon l'une quelconque des revendications précédentes, **caractérisé en ce que** du dioxyde de titane est utilisé en tant que donneur de titane.

6. Procédé selon l'une quelconque des revendications précédentes, **caractérisé en ce que** du carbone libre est formé à partir du noir de carbone en tant que donneur de carbone et/ou libéré à partir de la matrice polymère décomposée, évaporée, oxydée, dépolymérisée et/ou pyrolysée sous l'effet d'un laser,
de préférence **en ce que** le carbone libre est préparé exclusivement à partir de noir de carbone et/ou de la matrice polymère.

7. Procédé selon l'une quelconque des revendications précédentes, **caractérisé en ce qu'**une matrice polymère durcie par rayonnements est utilisée en tant que matrice polymère et/ou
**en ce qu'**une matrice polymère duroplastique est utilisée en tant que matrice polymère.

8. Procédé selon l'une quelconque des revendications précédentes, **caractérisé en ce que** des cendres pulvérisées de la formulation de pigment ayant une taille de particule moyenne en nombre de 0,5 µm à 2,0 µm sont formées par l'exposition à un laser.

9. Procédé selon l'une quelconque des revendications précédentes, **caractérisé en ce qu'**une couche de pigment ayant une épaisseur dans une plage allant de 20 µm à 500 µm est utilisée en tant que formulation de pigment.

10. Procédé selon l'une quelconque des revendications précédentes, **caractérisé en ce qu'**une couche de pigment qui est revêtue en partie ou en totalité avec une composition adhésive, notamment sensible à la pression, est utilisée en tant que formulation de pigment.

11. Procédé selon l'une quelconque des revendications précédentes, **caractérisé en ce qu'**une couche de pigment qui est appliquée sur un support, de préférence sur une feuille support, est utilisée en tant que formulation de pigment.

12. Procédé selon l'une quelconque des revendications précédentes, **caractérisé en ce qu'**une couche de pigment qui est désactivée par une couche de passivation appliquée partiellement est utilisée en tant que formulation de pigment,
de préférence **en ce que** la passivation a lieu sur le côté de la couche de pigment qui est en contact avec le substrat pendant un dépôt du TiC sur un substrat.

13. Procédé selon l'une quelconque des revendications précédentes, **caractérisé en ce que** l'exposition à un laser est réalisée avec un laser pulsé, de préférence avec une durée d'impulsion inférieure à 90 ns, de manière davantage préférée avec une durée d'impulsion comprise entre 40 ns et 90 ns.

14. Procédé de marquage d'un substrat avec formation de carbure de titane par le procédé selon l'une quelconque des revendications précédentes, selon lequel une formulation de pigment est appliquée sur le substrat à marquer et exposée à un laser, le rayon laser interagissant avec la formulation de pigment et du TiC étant déposé en tant que marquage sur le substrat dans les zones exposées.

15. Procédé selon la revendication 14, **caractérisé en ce qu'**un substrat transparent, notamment du verre, est utilisé en tant que substrat, et **en ce que** l'exposition du composé de pigment a lieu au travers du substrat, de manière à ce que le marquage soit formé sur le côté du substrat opposé à la source laser.

16. Procédé selon la revendication 14 ou 15, **caractérisé en ce que** le marquage est réalisé avec exclusion d'une fritte de verre et/ou avec exclusion d'un plastique fondant par exposition à un rayonnement énergétique.

17. Procédé selon l'une quelconque des revendications 14 à 15, **caractérisé en ce qu'**un hologramme par interférence ou un hologramme généré par ordinateur est appliqué en tant que marquage.
